# EUROPEAN PATENT APPLICATION

(11) **EP 4 848 182 A1**
(43) Date of publication of application: **02.12.2026**
(21) Application number: 25179968.0
(22) Date of filing: 30.05.2025
(51) Int. Cl.: G06Q 20/36, G06Q 20/38, G06Q 20/06

(54) **SECURE HARDWARE UNITS, SECURE TOKEN REFERENCE REGISTER, SYSTEM AND METHODS FOR GENERATING A NEW TOKEN AND/OR FOR MELTING AN EXISTING TOKEN**

(71) Applicant: Giesecke+Devrient advance52 GmbH, 81677 München (DE)
(72) Inventor: HUPEL, Lars, 81677 München (DE); ZELLER, Peter, 81677 München (DE)
(74) Representative: Ter Meer und Partner mbB

(57) **Abstract**

According to an independent aspect of the present invention, a secure hardware unit for generating a new token in an electronic payment transaction system is provided. The secure hardware unit comprises a storage unit in which an identifier of the secure hardware unit is stored. The identifier is linked to an end user within the electronic payment transaction system. The secure hardware unit comprises a control unit. The control unit is configured to: generate a token individual cryptographic key pair comprising a cryptographic private key and a cryptographic public key; select a monetary value independently from any existing token within the electronic payment transaction system; generate a new token reference by assigning a monetary value to the cryptographic public key; transmit a funding request including the new token reference to an external entity within the electronic payment transaction system; receive, in response to the funding request, a funding confirmation for the new token reference. The funding confirmation includes a registration confirmation for the new token reference. The control unit is further configured to enable the new token including the cryptographic private key and the monetary value a.

## Description

The present invention relates to secure hardware unit for generating a new token and/or for melting an existing token, a secure token reference register, a corresponding system and corresponding methods. In other words, the present invention relates to an extension of the no-double-spending protocol, NDSP, for a direct minting/reconciliating of tokens on a secure hardware unit against a central liquidity management.

Tokens - also referred to as digital assets, electronic coins, coin data sets - may represent any digital asset, in particular a digital currency, preferably a central bank digital currency, short CBDC. Conventionally, these tokens are minted (e.g. created) by an issuing unit or token issuing unit. These tokens are melted (e.g. destroyed) by the issuing unit or a dismissing unit of the token transaction system. The issuing unit and/or dismissing unit may be an issuing authority, or a central bank unit or a commercial bank unit.

Electronic token transactions and/or storage of tokens and any associated transaction data and/or storage data must be safe and secure and so, means for protecting confidentiality, integrity, and availability of exchanged and/or stored token data must be implemented. This is true for electronic payment transactions and associated payment transactions and payment storages in which a monetary value is linked with each token, subsequently also referred to as a token value.

According to one technical approach for a digital asset e.g., digital currency such as central bank digital currency, CBDC, issued by a central bank, as for instance described in WO 2020 / 212 331 A1 or WO 2023 / 036 458 A1, tokens are stored in a local token management unit to be directly exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token register stores token references of all valid tokens without knowing the tokens itself. So, the user can check validity of a received token. The token register only stores token references of the corresponding token. Tokens can be switched, split or merged by each individual participant, e.g., ownership of tokens can be switched from one participant to another participant, tokens can be split into plural tokens, e.g., for obtaining a token with a reduced monetary value and/or plural tokens can be merged to a single token, e.g., for obtaining a token with a higher monetary value.

Each participant in the electronic payment transaction system according to the third approach comprises a transaction unit or token management unit that is assigned to him. Each of these transaction units enable a high standard for security, confidentiality and safety regarding payment transactions and are therefore referred to as secure transaction units. The transaction unit is also known as wallets or token-wallets.

A wallet can be provided as a hardware wallet, e.g. as a smart card issued to a participant, or can be a so-called hosted-wallet, e.g. a wallet that is hosted by the individual service provider. A wallet may be hosted in a terminal device. The wallet may be an embedded wallet.

In conventional electronic payment transaction systems tokens can only be minted, i.e. created, or melted, i.e. destroyed, by central authorized agencies like a token issuing unit and/or the central bank, CB due to security reasons. Examples for a central token issuing unit are described in WO 2022/008319 A1 or WO 2024/012624 A1. In this context, the term "minting" includes a generation or creation of a new token that has not been present in the entire transaction system and preferably the registration of the generated new token, in particular the registration of the token reference of the generated new token, in a central token register. In this context, the term "melting" includes a destruction, removal or withdrawal of a token, a credit note for the monetary value associated with the melted token, and the deletion of the token within the entire transaction system, in particular the deletion of the token reference of the to-be-deleted token, in the token register. Therefore, in conventional electronic payment systems, no user, be it financial service provider like commercial banks or merchants or end users, is authorized to mint or melt a token in the electronic payment system. The users are only authorized to execute token transactions thereby modifying existing tokens of the electronic payment system without altering the overall monetary value corresponding to all tokens in the entire electronic payment system.

However, the requirements for minting new tokens and/or melting existing tokens constantly evolve, in particular with respect to timing constraints for such minting and/or melting operations.

In the conventional system, commercial banks may build up a token liquidity, i. e., store a plurality of issuable tokens, which can be requested for by individual wallets. Accordingly, the token issuing unit (central bank) may mint tokens and distribute the minted tokens via the respective commercial banks. However, the storage and management of issuable tokens at commercial banks increases the technical requirements for commercial banks in particular regarding security aspects. For instance, the commercial banks need to comprise their own wallet to manage the issuable tokens.

Hence, there is a need for speeding up and/or reducing complexity in existing methods and systems for minting new tokens and/or melting existing tokens within an electronic payment transaction system, without having to compromise on security. Moreover, there is a need for providing corresponding secure hardware units.

At least one of the above technical problems is provided by the secure hardware units, the secure token reference register, system and corresponding methods according to the independent claims. Further embodiments are specified in the respective dependent claims.

In one independent aspect of the present invention, a secure hardware unit for generating a new token in an electronic payment transaction system is provided. The secure hardware unit comprises a storage unit in which an identifier of the secure hardware unit is stored. The identifier is linked to an end user within the electronic payment transaction system. The secure hardware unit comprises a control unit. The control unit is configured to: generate a token individual cryptographic key pair comprising a cryptographic private key and a cryptographic public key; select a monetary value independently from any existing token within the electronic payment transaction system; generate a new token reference by assigning the selected monetary value to the cryptographic public key; transmit a funding request including the new token reference to an external entity within the electronic payment transaction system; receive, in response to the funding request, a funding confirmation for the new token reference. The funding confirmation includes a registration confirmation for the new token reference. The control module is further configured to enable the new token including the cryptographic private key and the selected monetary value. The external entity may be or may includes a central issuance entity and/or the external entity may include a secure token reference register, which may be configured to generate the registration confirmation.

A new token may be distinguished from an output token generated during a token transaction in that the monetary value of the new token increases the overall monetary value within the electronic payment transaction system. An output token as generated in a token transaction, in contrast, includes a monetary value which is generated based on the respective token transaction in such a way that it conserves the overall monetary value of tokens participating in the token transaction, thereby maintaining a current overall monetary value within the electronic payment transaction system.

While a "new token" according to the present disclosure increases the monetary value within the system, it does increase the monetary value across systems, since every new token worth a given monetary value must be offset by a debit transaction of a value corresponding to the monetary value.

The term "independently from any existing token" may refer to having no relation with a replacement of tokens. The selection or decision on the monetary value may be completely decorrelated from other tokens in the electronic payment transaction system, in particular from other tokens stored in the storage unit of the secure hardware unit. The term "independent" may be further understood as "free of base" within the electronic payment transaction system, i. e., the registration of the new token in a secure token reference register of the electronic payment transaction system is not based on any other registered or offline token. In other words, the term "independently from any existing token" may be understood as detached from all and every existing token within the electronic payment transaction system.

The selection of the monetary value and/or the monetary value itself may be independent of any existing token, i. e, a total volume of tokens, within the electronic payment transaction system.

During the secure generation of the new token, the generated cryptographic private key corresponding to a secret token element of the new token remains within the secure hardware unit, i. e., is not transferred over the air.

In another independent aspect of the present invention, a secure hardware unit for destroying an existing token in an electronic payment transaction system is provided. The secure hardware unit comprises a storage unit in which an identifier of the secure hardware unit is stored. The identifier is linked to an end user within the electronic payment transaction system. The secure hardware unit comprises a control unit. The control unit is configured to: generate a defunding request including the token reference; delete the token; transmit the defunding request to an external entity within the electronic payment transaction system for reconciliating the deleted token; and preferably receive a defunding confirmation for the deleted token. The aspect of melting / destroying an existing token is directly related to the aspect of minting /generating a new token by fundamental token management requirements. The defunding confirmation includes a reconciliation confirmation for the token reference. The external entity may be or may includes a central issuance entity and/or the external entity may include a secure token reference register, which may be configured to generate the reconciliation confirmation.

The registration confirmation may be or include an acknowledgement of a successful registration of the respective token reference. The reconciliation confirmation, in contrast, may be or include an acknowledgement of a successful destruction, removal or deletion of the registration of the respective token reference. Technically, the registration confirmation and the reconciliation confirmation may have the same structure and/or the same content, wherein the meaning of the respective acknowledgement may be distinguished based on the corresponding funding request or defunding request. The registration confirmation and/or the reconciliation confirmation may be signed by a key of the secure token reference register. Examples for a registration confirmation and the reconciliation registration may be found in WO 2024/012624 A1, in which the reconciliation confirmation may correspond to the removal confirmation.

In another independent aspect of the present invention, a method for minting a new token in an electronic payment transaction system is provided. The method comprises, by a secure hardware unit in the electronic payment transaction system: generating a token individual cryptographic key pair comprising a cryptographic private key and a cryptographic public key; selecting a monetary value independently from any existing token within the electronic payment transaction system; generating a new token reference by assigning the selected monetary value to the cryptographic public key; and transmitting a funding request including the new token reference to an external entity within the electronic payment transaction system. The method further comprises, by the external entity: generating a funding confirmation for the new token reference; and transmitting the funding confirmation to the secure hardware unit. The funding confirmation includes a registration confirmation for the new token reference. The method further comprises, by the secure hardware unit: enabling the new token including the cryptographic private key and the selected monetary value.

In another independent aspect of the present disclosure, a method for securely generating a new token within an electronic payment transaction system having a central issuance unit is provided. The method includes: generating a token individual cryptographic key pair including a cryptographic private key and a cryptographic public key in a secure hardware unit of the electronic payment transaction system; generating a new token reference by assigning the cryptographic public key a new monetary value, wherein the new monetary value increases a total sum of monetary values within the electronic payment transaction system in the secure hardware unit; generating a new token by assigning the cryptographic private key the new monetary value; generating a funding request including the new token reference; transmitting the funding request from the secure hardware unit to the central issuance unit; receiving, in response to the funding request, a funding confirmation of the central issuance unit and/or a secure token reference register of the electronic payment transaction system. The funding confirmation includes a registration confirmation for the new token reference. The method further includes enabling, in response to the funding confirmation, the new token.

In another independent aspect of the present invention, a method for melting an existing token in an electronic payment transaction system is provided. The method comprises, by a secure hardware unit in the electronic payment transaction system: generating a defunding request including the token reference deleting the token; and transmitting the defunding request to an external entity within the electronic payment transaction system for reconciliating the deleted token. The method further comprises, by the external entity: generating a defunding confirmation for the token reference; and transmitting the defunding confirmation to the secure hardware unit. The defunding confirmation includes a reconciliation confirmation for the token reference.

In another independent aspect of the present invention, a secure token reference register within the electronic payment transaction system is provided. The secure token reference register comprises a storage module, in which a plurality of token references is stored. The secure token reference register comprises a control module, wherein the control module is configured to: receive a registration request including a new token reference and preferably a create command; and verify the new token reference. When the new token reference is signed by a central issuance unit within the electronic payment transaction system, storing the new token reference in the storage module; and preferably generating a registration confirmation and providing the registration confirmation as the funding confirmation. When the new token reference is not signed by the central issuance unit, generate a registration failure notification.

In another independent aspect of the present invention, an electronic payment transaction system is provided. The electronic payment transaction system comprises an external entity; a secure token reference register; at least one service provider unit, preferably financial service provider unit; and one or more secure hardware units according an aspect of the present invention. The external entity, the secure token reference register, the at least one service provider unit, and the one or more secure hardware units are configured to participate in any of the methods according to aspects of the present invention. The external entity is or includes a central issuance entity; the external entity includes the secure token reference register; and/or the secure token reference register is one of any aspect of the present invention.

In another independent aspect of the present invention, a computer-readable storage medium is provided. Instructions are stored on the computer-readable storage medium, which, when executed by a secure hardware unit according to an aspect of the present invention, configure the control unit of the secure hardware unit to execute the method according to an aspect of the present invention.

The gist of the present invention is to empower the secure hardware unit with the direct generation of a new token, whose validity is established subsequently by an external entity within the electronic payment transaction system, in particular a central issuance entity. This initialization of a minting operation saves multiple requests between the participating units for minting a new token over conventional electronic payment transaction systems. Even though validity is established "after" the secure hardware unit generated the new token, a minting of the generated token as processed by the external entity may ensure that the secure hardware unit does not simply print money. Moreover, this approach reduces the need for maintaining a plurality of issuable tokens in a wallet at commercial banks acting in a service provider role. Similarly, overhead for melting an existing token is reduced by empowering the secure hardware unit to directly delete or destroy the respective token and supporting a post-reconciliating process. Accordingly, the complexity of conventional methods and/or systems for minting new tokens or melting existing tokens may be reduced, and the overall processing time for issuing a new, additional token to a secure hardware unit of an end user may be considerably reduced.

The generation of a temporary, internal token individual token element pair within the central issuance unit and a subsequent replacement of the temporary internal token by an issuable token as in WO 2024/012624 A1 is not necessary anymore according to aspects of the present invention. Instead, the data set (cryptographic key pair) corresponding to the new token is directly generated in the secure hardware unit whose (end) user requested the new token. Accordingly, the initial funding request to the external entity, e. g., the central issuance entity, already includes the new token reference. Upon confirmation of the new token reference, in particular by signing the new token reference, the external entity or the secure hardware unit preferably directly registers the new token reference based on a single registration request at the secure token reference register, instead of the combination of a registration and a replacement request.

The secure hardware unit, the method and/or the system may include at least one of the following aspects.

The new token (NT) may be generated outside of a total volume of existing tokens within the (entire) electronic payment transaction system. The new token may be a token without history in the electronic payment transaction system. The new token is not a replacement token, i. e., generated in replacement of at least a portion of another token of the electronic payment transaction system. The new token may be generated without being bound to an ongoing token transaction.

The control module may be configured to select the monetary value according to one or more predefined denominations. For instance, the monetary value may be selected only in units of 1, 2, 5, 10, 20, 50, 100, and/or 200.

The control module may be further configured to generate one or more replacement tokens for a token transaction, preferably within the total volume of existing tokens within the electronic payment transaction system. The control module may be further configured to generate a replacement request for registering the token transaction, the replacement request including one or more token references of the one or more replacement tokens, respectively. The replacement request may configure a secure token reference register to replace a registration of one or more registered token references by a registration of the one or more token references of the respective one or more replacement tokens. The funding request is not a replacement request, as it does not include any token reference of tokens to be replaced by the new token reference. The funding request may consist of the new token reference.

The new token reference may be a reference to the new token that can be publicly shared without endangering or even losing ownership of the new token. The cryptographic public key cannot prove ownership of the token, as opposed to the cryptographic private key.

The term "transaction" or "electronic payment transaction" may represent a transaction of a monetary value token between a sender and a recipient. A transaction of the monetary value token may represent a payment transaction, i.e., the change of an ownership of an amount of money which corresponds to the monetary values of the token involved in the transaction. A transaction may include a request for a monetary value by the transaction partner.

Enabling the new token may comprise storing the new token in the storage unit of the secure hardware unit and/or providing the new token within a new token transaction.

The new token may be enabled, i. e., minted, after having completed the registration of the new token reference at the secure token reference register.

The secure hardware unit may also be referred to as a secure token transaction unit. The secure hardware unit includes a storage unit which may be further configured to store one or more tokens. Each token may be a monetary value token, preferably a central bank digital currency token. The storage unit may be configured to store only references or links to one or more tokens stored centrally.

The control unit may be further configured to negotiate a secure payment channel with a further secure hardware unit, e. g., the secure hardware unit of a transaction partner. The control module may be further configured to exchange a token with the further secure hardware unit, either acting in the payer role or in the payee role.

A secure hardware unit (as described herein) may be or include a secure hardware unit, also referred to as secure wallet, secure token management unit; token wallet; and/or wallet may be used to locally manage tokens in the memory itself and/or to transform the tokens and to register a token in the electronic token transaction system. The token may be stored in a token storage that is also managed by the token wallet.

Each secure hardware unit may comprise one identifier, also referred to as secure token transaction unit identifier, ID, wallet-ID or wallet identification data. The identifier of the secure hardware unit may be assigned to a specific secure hardware unit for uniquely identifying the secure hardware unit in the electronic payment system. The identifier is stored in the storage unit of the specific secure hardware unit. The identifier may be bound to a private key of the secure hardware unit, in particular via a certificate. The control module may be configured to sign data based on the identifier of the secure hardware unit, i. e., using the private key of the secure hardware unit which is linked to its identifier.

The identifier of the secure hardware unit may be generated at the entity that issues the secure hardware unit, such as a (financial) service provider unit or a central authority in the electronic transaction system.

Alternatively, the identifier of the secure hardware unit may be generated by an official authority, a secure token issuing unit, e.g., a central bank unit. In this case, the identifier of the secure hardware unit may be received by the control means of the secure hardware unit issuing unit or the secure register unit.

In one embodiment, the secure hardware unit may be or include a secure cryptographic device, e. g., as specified according to ISO 13491-1. The secure hardware unit may be or include a device that provides physically and logically protected cryptographic services and storage, and which can be integrated into a larger system, such as an automated teller machine (ATM) or point-of-sale (POS) terminal.

The control unit is configured to select the monetary value for the new token independently from any existing token within the electronic payment transaction system. In other words, the monetary value of the new token increases the monetary value sum available in the form of tokens within the entire electronic payment transaction system.

The funding request may further include a create command. The funding request may consist of the create command and the new token reference. The create command may cause the secure token reference register to store or register the new token reference included in the funding request in the token reference register, i. e., to add the new token reference to the token reference register. In this configuration, the external entity, in particular a secure token reference register component of a central issuance entity or a stand-alone secure token reference register may interpret the create command to process the new token reference.

The defunding request may further include a destroy command, in case of melting an existing token. The destroy command may cause the secure token reference register to delete, destroy or remove the token reference included in the defunding request from the token reference register.

The new token may be stored in a data structure. The data structure may include: a first attribute, in which the cryptographic private key is stored; a second attribute, in which the monetary value is stored; and preferably a third attribute, in which an activation value is stored. The control unit may be further configured to store the activation value in response to the funding confirmation, preferably only in response to the funding confirmation.

The funding confirmation may further include the new token reference signed by the central issuance unit. Based on the funding confirmation, the secure hardware unit may use the new token reference signed by the central issuance unit for a payment transaction, as the signature of the central issuance unit as such proves the validity of the new token. In an optional scenario, the secure hardware unit may further register the new token in a secure token reference register of the electronic payment transaction system. The secure hardware unit may transmit a registration request consisting of the new token reference signed by the central issuance unit. Alternatively, the registration request may further include a "create" command. In either case, the secure token reference register is configured to add the new token reference to the register so that the validity of the corresponding new token may be verified subsequently by participants of the electronic payment transaction system. The secure token reference register may transmit a register confirmation to the secure hardware unit.

The funding confirmation includes a register confirmation for the new token reference. In this preferred scenario, the central issuance unit may be configured to generate a registration request based on the new token reference and transmit the registration request to the secure token reference register. In case the secure token reference register is included in or controlled by the central issuance unit, the register request may include the bare new token reference. Otherwise, the central issuance unit preferably signs the new token reference and includes the signed new token reference in the registration request to the secure token reference register.

In any case, the secure token reference register may recognize a create instruction from the registration request solely based on receiving the bare new token reference. To achieve this, the secure token reference register may compare the received new token reference against the token references stored within the register. Since the new token reference has been newly generated by the secure hardware unit, the secure token reference register should not find the new token reference within the stored token references at the register. Accordingly, the registration request may include only the new token reference or consist of the new token reference, and the secure token reference register may induce the create command based on the structure of the registration request. This feature may cause a reduction of the size of the registration request and/or the funding request, accordingly.

Similarly, the secure token reference register may recognize a destroy instruction from the reconciliation request solely based on receiving the bare existing token reference. To achieve this, the secure token reference register may compare the received token reference against the token references stored within the register. Since the token reference exists already, the secure token reference register should identify the token reference within the stored token references at the register. Accordingly, the reconciliation request may include only the existing token reference or consist of the existing token reference, and the secure token reference register may induce the destroy command based on the structure of the reconciliation request. This feature may cause a reduction of the size of the reconciliation request and/or the defunding request, accordingly.

The registration request and/or the reconciliation request may include a timestamp which indicates its time of generation. Accordingly, the backend (secure token reference register) may distinguish between a new request or a re-try of an old request in case the communication between the secure hardware unit and the backend has been interrupted.

The secure token reference register may transmit the registration confirmation and/or the reconciliation confirmation as funding confirmation or defunding confirmation directly to the secure hardware unit or via the service provider unit. In some embodiments, the secure token reference register may provide the registration confirmation and/or the reconciliation confirmation to the central issuance unit, which transmits the funding confirmation and/or defunding confirmation directly or via the service provider unit to the secure hardware unit.

The funding confirmation and/or the activation value may include a categorical data value and/or a unique activation code. The activation value preferably is signed by the external entity. The control unit of the secure hardware unit may be configured to assign the activation value, preferably signed activation value, to the new token to enable the new token for use within the electronic payment transaction system.

Storing the new token may include assigning the new monetary value to the cryptographic private key. The new token may be stored in a data structure including a first data field or attribute, in which the new monetary value is stored; and a second field or attribute, in which the generated cryptographic private key is stored. The data structure may further include a third field or status, in which an enabling status or activation value is stored. Enabling the new token may include setting the enabling status of the data structure storing the new token to "enabled" and/or by storing the activation value. Preferably the enabling status or activation value is signed by the central issuance unit. In one embodiment, the secure hardware unit is configured to set the enabling status to "enabled" or store the activation value upon receiving the funding confirmation. This enabling status or activation value has the additional advantage that a transaction partner may receive an indication of a valid token even if the secure token transaction register is not available, e. g., during an offline transaction.

In a malicious case, according to which a new token is generated without transmitting a funding request, the new token may not be verified by any participant of the electronic token transaction system, since the new token reference has not been registered at the secure token reference register. In this case, the enabled status is also not signed by the central issuance unit. Accordingly, the maliciously generated new token may even be identified in an offline transaction.

The control unit may be further configured to: sign the new token reference or the token reference based on the identifier, wherein the funding request includes the signed new token reference and/or the defunding request includes the signed token reference.

The control unit of the secure hardware unit may be further configured to transmit the funding request to a central issuance entity via a service provider unit. This configuration has the advantage of reducing the contacts of the central issuance entity to the number of service provider units within the electronic payment system, which is considerably lower than the number of secure hardware units. The service provider unit may act as a proxy within a communication channel between the secure hardware unit and the central issuance entity. Preferably, the external entity within the electronic payment transaction system is the central issuance entity.

The configuration in which the secure hardware unit transmits the funding request to the central issuance entity via the service provider unit has the further advantage of using an existing infrastructure for settling the monetary value of the new token against "real" money, e. g. physical cash, central bank reserves, deposits, e-money, cheques, foreign currencies. The service provider unit, when receiving the funding request including a new token reference, which includes the monetary money corresponding to the new token, may be configured to block the monetary value of the new token reference on a reference account for the secure hardware unit. The central issuance unit may, upon a verification of the funding request, debit a central liquidity management, CLM, of the service provider unit, e. g., a dedicated cash account, DCA, of the service provider unit with a value corresponding to the monetary value of the new token. Upon successfully debiting the CLM (e. g. DCA), in particular upon receiving a payment confirmation, e. g., a pacs.002 ISO 20022 message, the central issuance entity may sign the new token reference and/or generate the funding confirmation. After charging the CLM ( e. g. DCA), the monetary value of the new token is essentially paid for, however, not yet by the end user who initially requested the new token.

The DCA may be an account for monetary settlement in connection with token transactions. The DCA is typically established and managed by the service provider unit for the secure hardware unit within the CLM. The central issuance entity (or central bank) may be configured to debit the DCA with a value corresponding to the monetary value of the new token, wherien the DCA may be an account of the service provider unit at the central issuance entity, thereby settling the DCA.

The control unit of the secure hardware unit may be also configured to receive the funding confirmation from the central issuance entity via the service provider unit. As such, the service provider unit may, upon receipt of the funding confirmation, debit the reference account of the secure hardware unit with a value corresponding to the monetary value of the token, thereby settling the reference account.

The service provider unit may be a financial service provider unit, e. g., a commercial bank within the electronic payment transaction system. The service provider unit may be an issuer of the secure hardware unit.

The secure hardware unit, in particular its control unit, may be configured to sign the new token reference, and to transmit the signed new token reference within the funding request. The signature of the new token reference may indicate the origin of the new token reference to the service provider unit. The signature of the new token reference may include an identifier of the service provider unit.

Alternatively, or in addition, the secure hardware unit may transmit user credentials to the service provider unit. The user credentials may be used within a host application, which provides a communication channel between the secure hardware unit and its service provider unit. The host application may be a mobile application. Based on the user credentials, the service provider unit may identify the user of the secure hardware unit.

The service provider unit may be configured to add its own signature and/or credentials to the funding request, in particular to the new token reference, thereby updating and/or enriching the funding request to authenticate against the central issuance entity. The service provider unit may be configured to forward the (updated) funding request to the central issuance entity.

The central issuance entity may be a component of a central bank of the electronic payment transaction system. In conventional systems, the central issuance entity has been exclusively allowed to generate a new token, which was a temporary and purely internal token. According to the present invention, this step at the central issuance entity is not required anymore and may be therefore saved.

Minting of the token may be completed by registering the new token reference at the token register, more precisely referred to as secure token reference register, since only the token references are register, not the tokens themselves.

In one embodiment, the central issuance entity and the secure token reference register may belong to the same organization, e. g., be components of a central bank and/or be integrated into one common functional unit. In this configuration, the registration of the new token reference can be simplified, as it can be processed internally within the same organization. In this case, the new token reference, once received and/or verified by the central issuance entity, may be transmitted within a registration request to the secure token reference register.

In one embodiment, the central issuance entity and the secure token reference register may belong to different organizations and/or be two separate functions. In this configuration, it is advantageous, if the central issuance entity signs the new token reference and/or the registration request based on its certificate, i. e., using its private key. This signature proves the secure token register the validity of the new token reference and/or the registration request.

Even if the central issuance entity and the secure token reference register belong to the same organization, it may be beneficial for the central issuance entity to sign the new token reference and/or the registration request based on its certificate. This signature provides additional security against an organization-internal malicious party.

In either case, upon receiving the registration request, the secure token reference register is configured to store the new token reference in its storage module and preferably provide an acknowledgement or registration success notification or funding confirmation to the secure hardware unit, either directly or via the central issuance component and/or the service provider unit. Preferably, the result of registering the new token reference may be sent to the service provider unit. The result of registering the new token reference may correspond to the funding confirmation, as it indicated that the public identifier (new token reference) of the new token is accepted and registered in the electronic payment transaction system. Accordingly, in technical terms, the new token may be used similarly to any other centrally minted token within the electronic payment transaction system.

Optionally, the registration of the new token reference may be performed subsequently, by the secure hardware unit in which the new token reference has been generated, or even by a transaction partner thereof. In this case, the funding confirmation may include the new token reference signed by the central issuance entity. The funding confirmation may be transmitted from the central issuance entity to the secure hardware unit via the service provider unit. Based on the signed new token reference, the secure hardware unit, more precisely its control unit, may be configured to generate a registration request which includes the signature of the central issuance unit and preferably is further signed by the secure hardware unit. In this case, the secure token reference register may establish trust in the new token reference based on the signature of the central issuance unit.

The service provider unit may be configured to forward the funding confirmation from the central issuance unit to the secure hardware unit. Based on receiving the funding confirmation, the service provider unit may debit the reference account for the secure hardware unit with a value corresponding to the monetary value of the successfully acknowledged and/or registered new token reference. In case the service provider unit receives a registration failure notification and/or a time out and/or a funding failure notification, the service provider unit may be configured to release the block from the reference account. The funding confirmation and/or a funding failure notification may be forwarded to the secure hardware unit, preferably via the host application, e. g., a mobile application.

The control module may be further configured, preferably when storing the new token in the storage unit, to activate the new token. The control module may activate (or enable) the new token based on an activation value, which may be predetermined and/or received within the funding confirmation.

In one embodiment, the service provider unit may add its signature to the funding request or defunding request before forwarding the funding request or defunding request to the central issuance entity. Alternatively, instead of the service provider unit adding a signature, the service provider unit may be configured to replace the signature of the new token reference generated by the secure hardware unit. This configuration improves privacy, as it removes the identifier of the secure hardware unit from the new token reference.

The service provider unit forwarding the funding request and/or the defunding request does not need to be the service provider unit of the secure hardware unit. Any service provider unit may service the funding request and/or the defunding request within the electronic payment transaction system. To keep track of the cash flow corresponding to the new monetary value of the new token, the service provider unit may provide an additional signature in the process which certifies that it validated the cash received.

The external entity may be a central issuance entity. The method may further comprise, by the secure hardware unit: transmitting the funding request via a service provider unit to the central issuance entity. The method may further comprise, by the central issuance entity: signing the new token reference; generating the funding confirmation including the signed new token reference; and transmitting the funding confirmation via the service provider unit to the secure hardware unit. The method may further comprise, by the service provider unit: preferably signing the new token reference based on a certificate of the service provider unit and updating the funding request based on the signed new token reference; forwarding the funding request to the central issuance entity; and forwarding the funding confirmation to the secure hardware unit.

The method may further comprise, by the external entity: generating a registration request including the new token reference and/or a reconciliation request including the token reference; transmitting the registration request and/or the reconciliation request to a secure token reference register for minting the respective new token and/or destroying the respective token. The method may further include, by the secure token reference register, generating the registration confirmation and/or the reconciliation confirmation. The method may further include, preferably by the secure token reference register, else by the external entity, transmitting the funding request by including the registration confirmation of the secure token reference register and/or transmitting the defunding request by including the reconciliation confirmation of the secure token reference register.

The method may further comprise initiating the funding request or defunding request by an end user of the secure hardware unit, preferably via a host application. Transmitting the token reference or the new token reference may include transmitting user credentials of the end user.

The method may further comprise, by the secure hardware unit: signing the new token reference or the token reference based on a certificate of the secure hardware unit; and, preferably, by the service provider unit, removing a signature of the new token reference or the token reference and/or sign the new token reference or the token reference based on a certificate of the service provider unit.

The control unit of the secure hardware unit may keep track of a status of the funding request, such that the control unit may determine an appropriate time for enabling or activating the new token. Technically, it may be possible to activate the new token immediately, however, in this case, the new token is not valid and therefore cannot be used within the electronic payment transaction system. Preferably, the control unit activates the new token upon receiving the funding confirmation.

The service provider unit may not immediately debit the reference account for the secure hardware unit upon forwarding the funding request, since the minting process may fail, in which case the reference account should not be debited.

The central issuance entity may be configured to process the funding request and to register the new token reference at the secure token reference register atomically.

In the following, the invention or further embodiments and advantages of the invention are explained in more detail based on drawings, wherein the drawings describe only embodiments of the invention. Identical components in the drawings are given the same reference signs. Elements drawn or framed with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure hardware unit according to an aspect of the disclosure.
Fig. 2 shows an exemplary embodiment of a secure token reference register according to an aspect of the disclosure.
Fig. 3 shows an exemplary embodiment of a data structure in which a new token is stored when enabled or activated according to an aspect of the disclosure.
Fig. 4 shows an exemplary embodiment of an electronic payment transaction system according to an aspect of the disclosure.
Fig. 5 shows a first exemplary timing sequence of a method for minting a new token according to an aspect of the disclosure.
Fig. 6 shows a second exemplary timing sequence of a method for minting a new token according to an aspect of the disclosure.
Fig. 7 shows a first exemplary timing sequence of a method for melting an existing token according to an aspect of the disclosure.
Fig. 8 shows a second exemplary timing sequence of a method for melting an existing token according to an aspect of the disclosure.

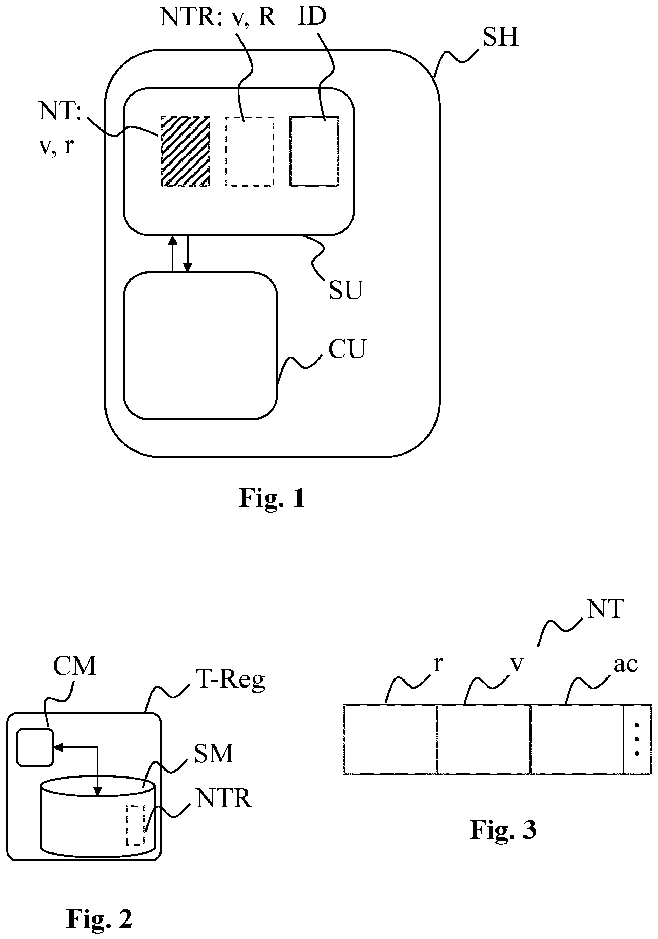

In Fig. 1 a schematic representation of an exemplary embodiment of a secure hardware unit SH according to an aspect of the disclosure is depicted. The secure hardware unit SH includes a storage unit SU and a control unit CU.

In the storage unit, an identifier ID of the secure hardware unit SH is stored. The identifier ID may be a certificate which is bound to the private key of the secure hardware unit SH. The identifier may include an identifier of the service provider unit SP which is linked to the secure hardware unit SH, e. g., through a reference account which may be debited or refunded upon minting or melting tokens.

The secure hardware unit SH may be configured to establish a near-field communication channel to a terminal device (not shown) or may be hosted by a terminal device (not shown). The terminal device or host may run an application through which the secure hardware unit SH, more precisely its control unit CU, may communicate with entities of the electronic payment transaction system, in particular air-gapped, central entities such as a service provider unit SP, a secure token reference register T-Reg, a central issuance entity, a central bank component, or other external entities within the electronic payment transaction system.

The storage unit SU may be configured to store one or more tokens or a link to one or more tokens stored somewhere else in the electronic payment transaction system TS. The storage unit SU may be configured to store an archive, a collection or a library of commands, which may include a create command, a switch command, a destroy command, and so on. The storage unit SU may be configured to store the token individual cryptographic key pair r, R generated for a new token NT and/or other cryptographic keys. For instance, the cryptographic private key r may be stored within the new token NT, and/or the cryptographic public R key may be stored within the new token reference NTR.

The control unit CU is configured to generate a token individual cryptographic key pair r, R comprising a cryptographic private key r and a cryptographic public key R. The cryptographic private key r is a secret token element that preferably never leaves the secure hardware unit SH in which it has been generated. The cryptographic public key R may act as the identifier of the token and may be used to register the token publicly to make the token verifiable in the secure token reference register.

The control unit CU is configured to generate a new token reference NTR by assigning a monetary value v to the cryptographic public key R. The monetary value v is a new monetary value in the electronic payment transaction system, i. e., it increases the sum of monetary values corresponding to tokens within the electronic payment transaction system. The term "assigning" may refer to storing said monetary value with the cryptographic public key R in a set data structure, e. g., a bit array. In particular, the elements in the set data structure representing the new token reference may be concatenated to a single (bit) string value.

The control unit CU is configured to transmit a funding request including the new token reference NTR to an external entity EE within the electronic payment transaction system TS. In its simplest form, the funding request may consist of the new token reference NTR. Alternatively, the funding request may include a create command, e. g., the command CREATE, which directly instructs the secure token reference register to add the new token reference to its database, i. e., its storage module SM.

The control unit CU is further configured to receive, in response to the funding request, a funding confirmation for the new token reference NTR. The control unit CU may receive the funding confirmation from the external entity EE, e. g., the central issuance unit CI, preferably via the service provider unit SP. The control unit CU may also receive the funding confirmation from the secure token reference register T-Reg upon successful registration of the new token reference.

The control unit CU may be configured to sign the new token reference NTR based on the identifier ID of the secure hardware unit SH, in particular the private key of the secure hardware unit SH. The signature not only ensures the data integrity of the new token reference NTR, but also enables backtracking of the origin of the new token reference NTR and therefore increases transparency and thereby trustworthiness for the locally generated new token NT.

The control unit CU is configured to store the new token NT based on the cryptographic private key r, the monetary value v and the funding confirmation in the storage unit SU, thereby enabling the new token NT and/or providing the new token NT for an electronic payment transaction. In other words, the control unit CU is configured to conduct a transaction with a further secure hardware unit SH using the new token NT based on the NDSP.

In Fig. 2 a schematic representation of an exemplary embodiment of a secure token reference register T-Reg according to an aspect of the disclosure is depicted. The secure token reference register T-Reg includes a storage module SM and a control module CM.

The storage module SM is configured to store a plurality of token references.

The control module CM is configured to verify token references provided to the secure token reference register T-Reg by participants in the electronic payment transaction system TS by searching for and identifying the requested token references within the plurality of token references stored in the storage module SM.

The control module CM is configure to process requests such as a registration request, a replacement request and/or a reconciliation request. Each request may include a number of input token references and/or a number of output token references. A request including one or more output token references may be a registration request, i. e., a request to add the one or more output token references to the register by storing the one or more output token references in the storage module SM. A request including one or more input token references may be a reconciliation request, i. e., a request to remove the one or more input token references from the register by destroying the one or more output token references in the storage module SM. The term "destroying" may include a physical deletion of the respective token reference. In case the request includes one or more input token references and one or more output token references, the request may be replacement request, i. e., a request to replace the respective input token references by the respective output token references.

The secure token reference register T-Reg and/or its control module CM may be configured to receive a registration request from the central issuance entity CI. The registration request includes the new token reference NTR, preferably signed by the central issuance entity CI. Upon checking the signature, the control module CM may be configured to store the new token reference NTR in the storage module SM, thereby concluding the minting of the new token NT.

The secure token reference register T-Reg and/or its control module CM may be configured to receive a registration request from a secure hardware unit SH, preferably the secure hardware unit SH in which the new token reference NTR has been generated. In this case, the new token reference should be signed by the central issuance entity CI to confirm the validity of the new token reference NTR. Upon checking the signature, the control module CM may be configured to store the new token reference NTR in the storage module SM, thereby concluding the minting of the new token NT.

After having registered the new token reference NTR in the secure token reference register T-Reg, any participant in the electronic payment transaction system TS may verify the new token NT like any other centrally minted token within the electronic payment transaction system TS.

The storage unit SU may be configured to store a new token NT in a data structure as depicted in the example of Fig. 3.

The data structure may include a first attribute, in which the cryptographic private key r may be stored. The data structure may include a second attribute, in which the monetary value v may be stored. The data structure may include a third attribute, in which an activation value ac may be stored. The data structure may include further attributes (depicted by the three dots in Fig. 3), in which further values may be stored.

The activation value a may indicate an active status of the new token NT. The activation value ac may be received by way of the funding confirmation. The activation value ac may include a categorical data value, such as "active"/"inactive" or "enabled"/"disabled". The activation value ac may include a unique activation code. The activation value ac may preferably be signed by the external entity EE.

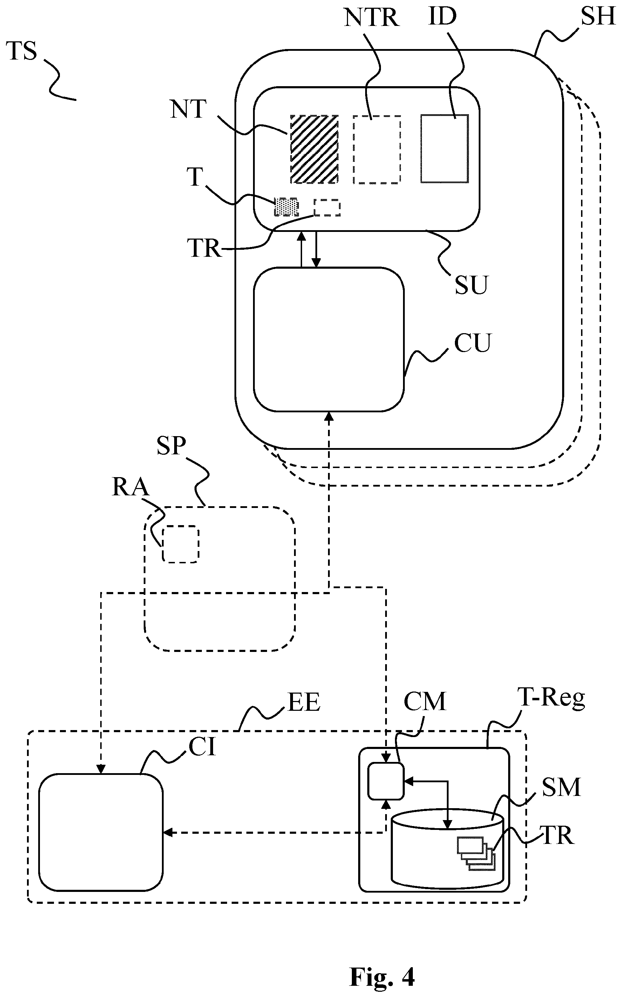

In Fig. 4 a schematic representation of an exemplary embodiment of an electronic payment transaction system TS according to an aspect of the disclosure is depicted. The electronic payment transaction system TS in the example of Fig. 4 includes one or more secure hardware units SH, a service provider unit SP, and an external entity EE. The external entity includes a central issuance entity CI and a secure token reference register T-Reg.

The service provider unit SP may manage a reference account RA to be debited and/or refunded upon minting/melting of new/existing tokens.

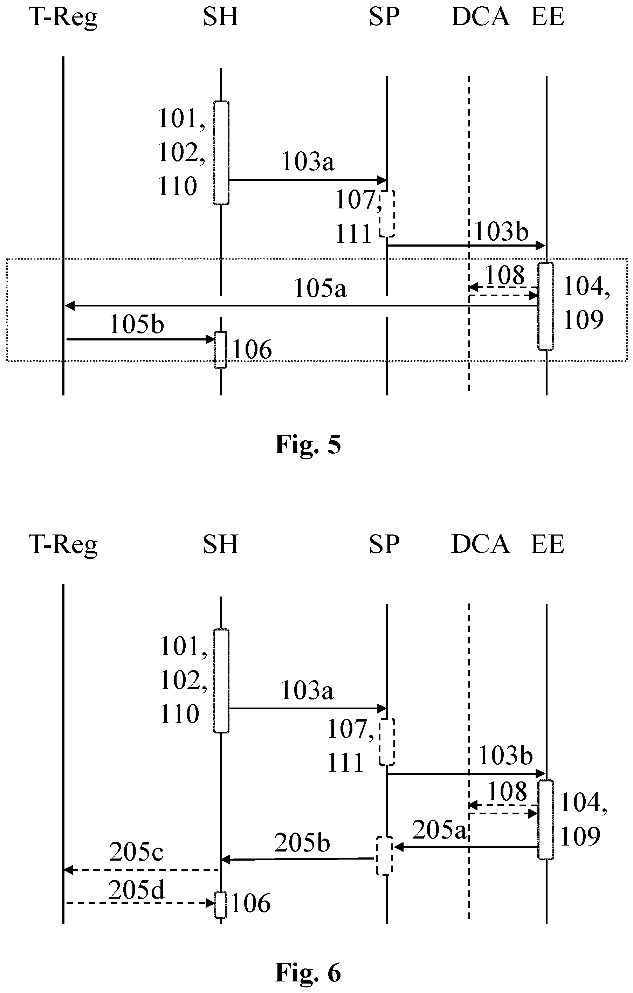

The functionality of the secure hardware units SH may correspond to the one described with respect to Fig. 1. The functionality of the secure token reference register T-Reg may correspond to the one described with respect to Fig. 2. The collective functionality of the system, i. e., interactions between the secure hardware units SH, the service provider unit SP, and the external entity EE are described on a method step level with respect to the Fig. 5-8.

Although depicted as element of the external entity EE in Fig. 4, the secure token reference register T-Reg may be a standalone component in the electronic payment transaction system TS. The external entity EE may be a central bank component.

In Fig. 5 a first exemplary timing sequence of a method for minting a new token NT according to an aspect of the disclosure is depicted. The vertical dimension is a time dimension, i. e, the time evolves in the timing sequence starting from the heading of each column / line along the respective line, for each line concurrently. The embodiment of Fig. 5 may be a preferred embodiment of the method for minting a new token NT.

The minting operation as depicted in the example of Fig. 5 may be initialized by the secure hardware unit SH, which is assigned to a user (end user) of the electronic payment transaction system TS. Initiating the minting operation may include a funding request which may be generated within a host application linked to the secure hardware unit SH and run on the terminal device (not shown). Initiating the minting operation further includes generating 101 a token individual cryptographic key pair r, R comprising a cryptographic private key r and a cryptographic public key R; and generating 102 a new token reference NTR by assigning a monetary value v to the cryptographic public key R.

The method may further include, by the secure hardware unit SH: generating a funding request based on the new token reference NTR, preferably consisting of the new token reference NTR. In one embodiment, the secure hardware unit SH may sign 110 the new token reference NTR and/or the funding request based on the identifier ID of the secure hardware unit SH.

The method further includes, by the secure hardware unit SH, transmitting 103a, 103b the funding request including the new token reference NTR to an external entity EE within the electronic payment transaction system TS. Preferably, the transmitting 103a, 103b includes transmitting 103a the funding request to a service provider unit SP, e. g., the service provider unit SP of the secure hardware unit SH.

The method may further include, by the service provider unit SP, signing 107 the new token reference and/or the funding request based on a certificate of the service provider unit SP. Preferably, the method further includes removing /replacing 111 a signature of the secure hardware unit SH in the funding request. Preferably, the transmitting 103a, 103b further includes transmitting 103b the funding request from the service provider unit SP to the external entity EE or its central issuance unit CI.

The method further includes, by the external entity EE: generating 104 a funding confirmation for the new token reference NTR; and transmitting 105a, 105b the funding confirmation to the secure hardware unit SH.

The external entity EE may transmit 105a a registration request to the secure token reference register T-Reg, which, upon successful registration of the new token reference NTR, transmits 105b the funding confirmation to the secure hardware unit SH. In this variant, the funding confirmation is or includes an acknowledgement or a registration confirmation of the secure token reference register T-Reg.

The method may preferably include, by the external entity EE, signing 109 the new token reference NTR.

Optionally, the method may include debiting 108 a DCA upon processing the funding request, preferably prior to transmitting 105a, 105b the funding confirmation. The DCA is owened by the service provider unit SP, which preferably blocked a value corresponding to the monetary value v of the new token reference NTR. The DCA is managed by the external entity, e. g., the central issuance entity CI or a central bank including the central issuance entity CI. In particular, the external entity EE may instruct in step 108 the DCA management DCA to debit a value corresponding to the monetary value of the new token from the DCA of the respective service provider unit SP.. The DCA management may return an ISO pacs.002 message (for example) to confirm successful debiting of the DCA, as indicated by the second arrow underneath the arrow for step 108 in Fig. 5. Subsequently, the process may continue with step 105a.

The method further includes, by the secure hardware unit SH, storing the new token NT based on the cryptographic private key r, the monetary value v and the funding confirmation in a storage unit SU of the secure hardware unit SH, thereby enabling the new token NT.

The method steps surrounded by the dotted rectangle in Fig. 5 are preferably conducted atomically. These method steps may collectively form the actual minting step for the new token NT. This configuration ensures that in case of failure, all involved accounts remain synchronized. In case of failure, the method may just be repeated, in particular starting from the transmitting 103a, 103b.

In Fig. 6 a second exemplary timing sequence of a method for minting a new token NT according to an aspect of the disclosure is depicted.

The second exemplary timing sequence differs from the example of Fig. 5 in the actual minting step of the method. The steps known from Fig. 5 may be identical to the ones described with respect to Fig. 5.

The external entity EE may transmit 205a, 205b a funding confirmation via the service provider unit SP to the secure hardware unit SH. The funding confirmation may include the new token reference NTR signed by the external entity EE.

The secure hardware unit SH, upon receiving the funding confirmation, may transmit 205c a registration request to the secure token reference register T-Reg. The registration request may consist of the new token reference NTR signed by the external entity EE. Upon successful registration of the new token reference NTR, the secure token reference register T-Reg may transmit 205d an acknowledgement or a registration confirmation to the secure hardware unit SH.

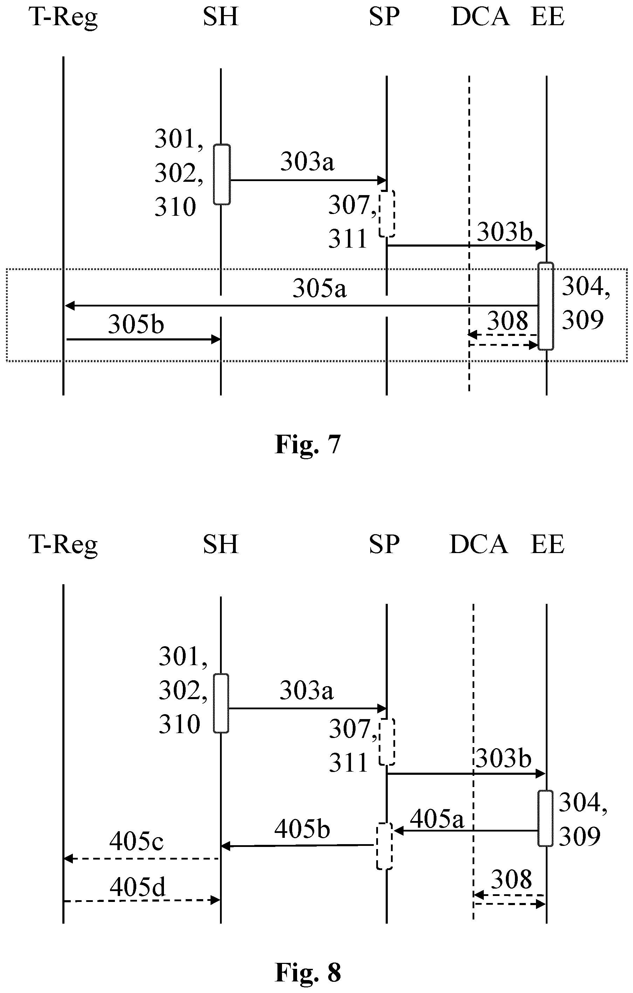

In Fig. 7 a first exemplary timing sequence of a method for melting an existing token T according to an aspect of the disclosure is depicted. The embodiment of Fig. 7 may be a preferred embodiment of the method for melting an existing token T.

The melting operation as depicted in the example of Fig. 7 may be initialized by the secure hardware unit SH, which is assigned to a user (end user) of the electronic payment transaction system TS. Initiating the melting operation may include a defunding request which may be generated within a host application linked to the secure hardware nit SH and run on the terminal device (not shown). Initiating the melting operation further includes generating 301 a defunding request including the token reference TR of the to-be-deleted token T; and deleting 302 the existing token T.

In one embodiment, the secure hardware unit SH may sign 310 the token reference TR and/or the defunding request based on the identifier ID of the secure hardware unit SH.

The method further includes, by the secure hardware unit SH, transmitting 303a, 303b the defunding request including the token reference TR to an external entity EE within the electronic payment transaction system TS. Preferably, the transmitting 303a, 303b includes transmitting 303a the defunding request to a service provider unit SP, e. g., the service provider unit SP of the secure hardware unit SH.

The method may further include, by the service provider unit SP, signing 307 the token reference TR and/or the defunding request based on a certificate of the service provider unit SP. Preferably, the method further includes removing /replacing 311 a signature of the secure hardware unit SH in the defunding request. Preferably, the transmitting 303a, 303b further includes transmitting 303b the defunding request from the service provider unit SP to the external entity EE or its central issuance unit CI.

The method further includes, by the external entity EE: generating 304 a defunding confirmation for the token reference TR; and transmitting 305a, 305b the defunding confirmation to the secure hardware unit SH.

The external entity EE may transmit 305a a reconciliation request to the secure token reference register T-Reg, which, upon successful destruction/removal of the token reference TR, transmits 305b the defunding confirmation to the secure hardware unit SH. In this variant, the defunding confirmation is or includes an acknowledgement or a reconciliation confirmation of the secure token reference register T-Reg.

The method may preferably include, by the external entity EE, signing 109 the token reference TR.

Optionally, the method may include refunding 308 a DCA upon processing the defunding request, preferably prior to transmitting 305a, 305b the defunding confirmation, or subsequent to transmitting 305a, 305b the defunding confirmation as shown in Fig, 7. The DCA is owned by the service provider unit SP. The DCA is managed by the external entity, e. g., the central issuance entity CI or a central bank including the central issuance entity CI. In particular, the external entity EE may instruct in step 308 the DCA management DCA to refund a value corresponding to the monetary value of the to-be-deleted token t the DCA of the respective service provider unit SP. The DCA management may return an ISO pacs.004 message (for example) to confirm successful refunding of the DCA, as indicated by the second arrow underneath the arrow for step 308 in Fig. 7.

The method steps surrounded by the dotted rectangle in Fig. 7 are preferably conducted atomically. These method steps may collectively form the actual melting step for the existing token T. This configuration ensures that in case of failure, all involved accounts remain synchronized. In case of failure, the method may just be repeated, in particular starting from the transmitting 303a, 303b.

In Fig. 8 a second exemplary timing sequence of a method for melting an existing token T according to an aspect of the disclosure is depicted.

The second exemplary timing sequence differs from the example of Fig. 7 in the actual melting step of the method. The steps known from Fig. 7 may be identical to the ones described with respect to Fig. 7.

The external entity EE may transmit 405a, 405b a defunding confirmation via the service provider unit SP to the secure hardware unit SH. The defunding confirmation may include the token reference TR signed by the external entity EE.

The secure hardware unit SH, upon receiving the defunding confirmation, may transmit 405c a reconciliation request to the secure token reference register T-Reg. The reconciliation request may consist of the token reference TR signed by the external entity EE as input token. Upon successful destruction or removal of the token reference TR, the secure token reference register T-Reg may transmit 405d an acknowledgement or a reconciliation confirmation to the secure hardware unit SH.

### Reference signs

- SH: secure hardware unit
- ID: identifier of the secure hardware unit
- CU: control unit
- SU: storage unit

- NT: new token
- r: cryptographic private key
- v: monetary value
- ac: activation value

- NTR: new token reference
- R: cryptographic public key
- T: existing token
- TR: token reference of token T

- TS: electronic payment transaction system
- EE: external entity
- CI: central issuance entity
- SP: service provider unit
- T-Reg: secure token reference register
- CM: control module
- SM: storage module
- DCA: Dedicated Cash Account Management

- 101: generating key pair r, R
- 102: generating NTR
- 103a: transmitting funding request to SP
- 103b: transmitting funding request to EE
- 104: generating funding confirmation
- 105a: transmitting registration request to T-Reg
- 105b: transmitting acknowledgement to SH
- 106: storing NT, thereby enabling NT
- 107: signing NTR or funding request
- 108: debiting DCA of SP
- 110: signing NTR of funding request
- 111: replacing signature in funding request
- 205a: transmitting funding confirmation to SP
- 205b: forwarding funding confirmation to SH
- 205c: transmitting registration request to T-Reg
- 205d: transmitting acknowledgement to SH
- 301: generating defunding request
- 302: deleting T
- 303a: transmitting defunding request to SP
- 303b: transmitting defunding request to EE
- 304: generating defunding confirmation
- 305a: transmitting reconciliation request to T-Reg
- 305b: transmitting acknowledgement to SH
- 307: signing TR or defunding request
- 308: refunding DCA of SP
- 310: signing TR of defunding request
- 311: replacing signature in defunding request
- 405a: transmitting defunding confirmation to SP
- 405b: forwarding defunding confirmation to SH
- 405c: transmitting reconciliation request to T-Reg
- 405d: transmitting acknowledgement to SH

## Claims

1. A secure hardware unit (SH) for generating a new token (NT) in an electronic payment transaction system (TS), the secure hardware unit (SH) comprising a storage unit (SU) in which an identifier (ID) of the secure hardware unit (SH) is stored, wherein the identifier (ID) is linked to an end user within the electronic payment transaction system (TS), and a control unit (CU) which is configured to:
generate a token individual cryptographic key pair (r, R) comprising a cryptographic private key (r) and a cryptographic public key (R);
select a monetary value (v) independently from any existing token (T) within the electronic payment transaction system (TS);
generate a new token reference (NTR) by assigning the selected monetary value (v) to the cryptographic public key (R);
transmit a funding request including the new token reference (NTR) to an external entity (EE) within the electronic payment transaction system (TS);
receive, in response to the funding request, a funding confirmation for the new token reference (NTR), wherein the funding confirmation includes a registration confirmation for the new token reference (NTR)
enable the new token (NT) including the cryptographic private key (r) and the selected monetary value (v) .

2. The secure hardware unit (SH) of claim 1, wherein the new token (NT) is generated outside of a total volume of existing tokens (T) within the electronic payment transaction system (TS).

3. The secure hardware unit (SH) of claim 1 or 2, wherein the control module is further configured to:
generate one or more replacement tokens for a token transaction, preferably within the total volume of existing tokens (T) within the electronic payment transaction system (TS); and
generate a replacement request for registering the token transaction, the replacement request including one or more token references of the one or more replacement tokens, respectively, wherein the replacement request configures a secure token reference register (T-Reg) to replace a registration of one or more registered token references by a registration of the one or more token references of the respective one or more replacement tokens.

4. The secure hardware unit (SH) of any of the preceding claims, wherein the new token (NT) is stored in a data structure which includes:
a first attribute, in which the cryptographic private key (r) is stored;
a second attribute, in which the monetary value (v) is stored; and
preferably a third attribute, in which an activation value (ac) is stored,
wherein the control unit (CU) is further configured to store the activation value (ac) in response to the funding confirmation, preferably only in response to the funding confirmation.

5. The secure hardware unit (SH) of claim 4, wherein the activation value (ac) includes a categorical data value and/or a unique activation code, wherein the activation value (ac) preferably is signed by the external entity (EE).

6. A secure hardware unit (SH) for destroying an existing token (T) in an electronic payment transaction system (TS), the secure hardware unit (SH) comprising a storage unit (SU) in which a token (T), a token reference (TR) corresponding to the token (T), and an identifier (ID) of the secure hardware unit (SH) are stored, wherein the identifier (ID) is linked to an end user within the electronic payment transaction system (TS), and a control unit (CU) which is configured to:
generate a defunding request including the token reference (TR);
delete the token (T);
transmit the defunding request to an external entity (EE) within the electronic payment transaction system (TS) for reconciliating the deleted token (T); and
preferably receive a defunding confirmation for the deleted token (T), wherein the defunding confirmation includes a reconciliation confirmation for the token reference (TR).

7. The secure hardware unit (SH) of any of the preceding claims, wherein the control unit (CU) is further configured to:
sign the new token reference (NTR) or the token reference (TR) based on the identifier (ID), wherein the funding request includes the signed new token reference and/or the defunding request includes the signed token reference.

8. A method for minting a new token (NT) in an electronic payment transaction system (TS), the method comprising:
by a secure hardware unit (SH) in the electronic payment transaction system (TS):
generating (101) a token individual cryptographic key pair (r, R) comprising a cryptographic private key (r) and a cryptographic public key (R);
selecting a monetary value (v) independently from any existing token (T) within the electronic payment transaction system (TS);
generating (102) a new token reference (NTR) by assigning the selected monetary value (v) to the cryptographic public key (R); and
transmitting (103a, 103b) a funding request including the new token reference (NTR) to an external entity (EE) within the electronic payment transaction system (TS);
by the external entity (EE):
generating (104) a funding confirmation for the new token reference (NTR), wherein the funding confirmation includes a registration confirmation for the new token reference (NTR); and
transmitting (105a, 105b, 205a, 205b) the funding confirmation to the secure hardware unit (SH); and
by the secure hardware unit (SH):
enabling the new token (NT) including the cryptographic private key (r) and the selected monetary value (v).

9. The method of claim 8, wherein the external entity (EE) is or includes a central issuance entity (CI), and wherein the method further comprises:
by the secure hardware unit (SH):
transmitting (103a, 103b) the funding request via a service provider unit (SP) to the central issuance entity (CI),
by the central issuance entity (CI):
signing (109) the new token reference (NTR);
generating (104) the funding confirmation by including the signed new token reference; and
transmitting (205a, 205b) the funding confirmation via the service provider unit (SP) to the secure hardware unit (SH); and
by the service provider unit (SP):
preferably signing (107) the new token reference (NTR) based on a certificate of the service provider unit (SP) and updating the funding request based on the signed new token reference;
forwarding (103b) the funding request to the central issuance entity (CI); and forwarding (205b) the funding confirmation to the secure hardware unit (SH).

10. A method for melting an existing token (T) in an electronic payment transaction system (TS), the method comprising:
by a secure hardware unit (SH) in the electronic payment transaction system (TS):
generating (301) a defunding request including the token reference (TR);
deleting (302) the token (T); and
transmitting (303a, 303b) the defunding request to an external entity (EE) within the electronic payment transaction system (TS) for reconciliating the deleted token (T);
by the external entity (EE):
generating (304) a defunding confirmation for the token reference (TR), wherein the defunding confirmation includes a reconciliation confirmation for the token reference (TR); and
transmitting (305a, 305b) the defunding confirmation to the secure hardware unit (SH).

11. The method of any of the claim 8-10, further comprising, by the external entity (EE):
generating (109, 309) a registration request including the new token reference (NTR) and/or a reconciliation request including the token reference (TR);
transmitting (105a, 305a) the registration request and/or the reconciliation request to a secure token reference register (T-Reg) for minting the respective new token (NT) and/or melting the respective token (T); and
by the secure token reference register (T-Reg):
generating the registration confirmation and/or the reconciliation confirmation; and
transmitting (304) the funding request by including the registration confirmation and/or transmitting the defunding request by including the reconciliation confirmation.

12. The method of any of the claims 8-11, further comprising initiating the funding request or defunding request by an end user of the secure hardware unit (SH); and/or
wherein transmitting the token reference (TR) or the new token reference (NTR) includes transmitting user credentials of the end user.

13. The method of any of the claims 8-12, the method further comprising, by the secure hardware unit (SH), signing (110, 310) the new token reference (NTR) or the token reference (TR) based on a certificate of the secure hardware unit (SH); and, preferably, by the service provider unit (SP), removing (107, 307) a signature of the new token reference (NTR) or the token reference (TR) and/or sign (111, 311) the new token reference (NTR) or the token reference (TR) based on a certificate of the service provider unit (SP).

14. A secure token reference register (T-Reg) within the electronic payment transaction system (TS), the secure token reference register (T-Reg) comprising a storage module (SM), in which a plurality of token references (TR) is stored, and a control module (CM), wherein the control module (CM) is configured to:
receive a registration request including a new token reference (NTR) and preferably a create command;
verify the new token reference (NTR), wherein:
when the new token reference (NTR) is signed by a central issuance unit (CI) within the electronic payment transaction system (TS), storing the new token reference (NTR) in the storage module (SM); and preferably generating a registration confirmation or acknowledgement and providing the registration confirmation as the funding confirmation; and
when the new token reference (NTR) is not signed by the central issuance unit (CI), generate a registration failure notification.

15. An electronic payment transaction system (TS), comprising;
An external entity (EE);
a secure token reference register (T-Reg);
at least one service provider unit (SP), preferably financial service provider unit; and
one or more secure hardware units (SH) according to any of the claims 1-7, wherein:
the external entity (EE), the secure token reference register (T-Reg), the at least one service provider unit (SP), and the one or more secure hardware units (SH) are configured to participate in any of the methods according to claims 8 to 13; and
the external entity (EE) is or includes a central issuance entity (CI); the external entity (EE) includes the secure token reference register (T-Reg); and/or the secure token reference register (T-Reg) is one of claim 14.
